(19) Europäisches Patentamt
European Patent Office
Office européen des brevets

(11) Publication number: 0 190 398
A1

# (12) EUROPEAN PATENT APPLICATION

(21) Application number: 85112678.9

(22) Date of filing: 07.10.85

(51) Int. Cl.⁴: C 08 K 5/09
C 08 L 21/00, C 08 J 5/10

(30) Priority: 31.01.85 US 697096

(43) Date of publication of application:
13.08.86 Bulletin 86/33

(84) Designated Contracting States:
DE FR GB IT LU

(71) Applicant: THE FIRESTONE TIRE & RUBBER COMPANY
1200 Firestone Parkway
Akron, Ohio 44317(US)

(72) Inventor: Davis, James A.
10688 Mogadore Road
Uniontown Ohio 44685(US)

(72) Inventor: Kang, Jung W.
6150 Terrace Hills Drive
Clinton Ohio 44216(US)

(72) Inventor: Koch, Robert C.
1121 Merriman Road
Akron Ohio 44313(US)

(74) Representative: Kraus, Walter, Dr. et al,
Patentanwälte Kraus, Weisert & Partner
Thomas-Wimmer-Ring 15
D-8000 München 22(DE)

## (54) Rubber compositions with improved rubber-metal adhesion.

(57) This invention is directed to a synthetic rubber-containing skim stock and a product containing the skim stock having improved adhesion between a brassed or zinc coated metal member and contiguous rubber skim stock. The invention lies in the discovery that improved rubber-to-metal adhesion, and adhesion retention, can be obtained by adding to a synthetic rubber-containing skim stock composition appropriate amounts of cobalt propionate such synthetic rubber skim stocks contain at least one synthetic rubber and, optionally, natural rubber.

In the practice of this invention, cobalt propionate is mixed into a rubber skim stock composition, which composition is brought into contiguous relationship with a brassed or zinc coated metal member in the unvulcanized composition followed by vulcanization to yield the end product.

EP 0 190 398 A1

0190398

# RUBBER COMPOSITIONS WITH IMPROVED RUBBER-METAL ADHESION

## REFERENCE TO RELATED APPLICATIONS

This application is a continuation-in-part of copending application Serial No. 147,813 filed May 8, 1980.

## BACKGROUND OF THE INVENTION AND PRIOR ART

### Field of the Invention

This invention relates to rubber compositions and to metal wire or cord-reinforced components made from them useful in manufacturing composite rubber articles. More particularly, it concerns rubber formulations containing cobalt propionate as a metal to rubber adhesion promoting additive. Specifically in a typical embodiment the invention includes composite synthetic rubber plies reinforced with brass-or zinc-coated steel wire or cord which are useful in manufacturing steel-belted radial tires.

In the production of rubber articles such as hose, pneumatic tires or power transmission belts such as V-belts, toothed positive drive belts, etc., it is generally necessary to reinforce the rubber or elastomeric product. In the past, textile materials have been employed for this purpose. However, wire cord has been found to be more desirable under certain conditions of use, for example, in pneumatic tires of the radial ply type. Maximum reinforcement of the rubber is obtained when maximum adhesion is produced and retained between the laminate of a contiguous rubber skim stock and the metal reinforcing element as used to form a unitary structure. Of equal importance is the requirement that, for example, the laminate of the reinforcing metal element and

contiguous rubber remain in a bonded relationship with each other throughout the useful life of the reinforced structure in which the laminate is used.

To achieve satisfactory rubber-to-metal bonding, numerous methods have been developed. For example, U.S. Patent No. 2,720,479 describes a system wherein a phenolic resin and a brominated isoolefin-polyolefin interpolymer are dissolved in a suitable liquid carrier and the resulting adhesive composition is spread on rubber which is to be bonded to metal. The rubber and metal are subsequently pressed together and vulcanized. U.S. Patent No. 2,581,920 also describes the use of halogenated polymers to bond rubber to metal.

The disclosure of U.S. Patent No. 3,903,026 teaches the preparation of a rubber composition having improved metal adhesion properties even after thermal aging; this is disclosed to be achieved by compounding cobalt carboxylate and magnesium oxide (0.1 to 4 phr) into rubber, cobalt propionate is not mentioned.

U.S. Patent No. 4,137,359 to Bak, et al. discloses vulcanizable elastomeric compositions having improved adhesion to metals. This is accomplished by adding to the composition organic carboxylic acid salts of two different metals combined with one or more carboxylic acid. One of the metals is an oxidizing constituent and the second metal is a catalyst for enhancing polymerization. Included among the oxidizing constituents is cobalt and one of the acids disclosed is propionic acid. See column 4, line 62. However, nothing is disclosed regarding the effect of cobalt propionate when used alone.

U.S. Patent No. 1,919,718 to Gray discloses and claims methods and compositions for adhering rubber to metals. The invention comprises adding certain metal salts of (preferably) high molecular weight fatty acids to a rubber composition to form a cement. Cobalt is the

preferred metal and the acids comprise those non-volatile fatty acids which form "soaps". Cobalt stearate is used as an illustrative example. Patentee additionally discloses, however, that fatty acids of lower molecular weight can be used and specifically names the acetate, butyrate, oxalate and succinate (page 2, lines 33-35); cobalt propionate is not mentioned.

U.S. Patent No. 2,912,355 to Formanek, et al. relates to improving the adhesion of rubber to metals. The objects of the invention are achieved by adding any one of cobalt formate, acetate, butyrate, oleate, citrate, tartrate, or benzoate. There is no mention of cobalt propionate.

U.S. Patent No. 3,514,370 to Canevari relates to the addition of a cobalt salt to an elastomeric composition to improve adhesion of the latter to metal surfaces. Included among the cobalt salts are the acetate, linoleate, stearate, oleate, and naphthenate; cobalt propionate is not mentioned.

British Patent No. 1,169,366 to Dunlop discloses improving the adhesion of natural rubber to a metal surface of steel, brass or zinc by adding to the natural rubber composition an organic peroxide and a cobalt salt. According to the disclosure in the specification, the cobalt salt is preferably a salt of an organic acid such as cobalt linoleate, naphthenate, stearate, oleate, acetate, or resinate. In addition, the specific examples also mention the use of cobalt octoate; however, cobalt propionate is not mentioned.

U.S. Patent No. 3,993,847 to Kondo relates to the addition of silica to a rubber composition to improve the adhesion to metal. However, the patentee discloses further that, in addition to adding the silica to promote the bond strength, it is usually preferable to use compounds of cobalt and organic carboxylic acids. As examples of these, there are mentioned the linoleates,

stearates, oleates, acetates, resinates, naphthenates, and the like; cobalt propionate is not mentioned.

U.S. Patent No. 3,998,992 to Nakamura relates to improving the bond strength of composite articles of rubber adhered to ferrous metal substrates. So-called "processing aids" as listed in column 7, lines 9-12, include materials such as the metal salts of naphthenates, linoleates, stearates, oleates, acetates, and resinates. Patentee states that, generally, the cobalt salts are most often used although salts of iron, nickel, copper or aluminum are also effective; cobalt propionate is not mentioned. Improved adhesion in accordance with this patent is acheived through the use of an intermediate adhesive, rubber-containing layer. It is to this intermediate layer that the cobalt salts are added.

Russian Patent No. 152952 relates to a method of improving the adhesion of rubber to metal by adding cobalt acetate to the rubber composition; cobalt propionate is not mentioned.

U.S. Patent No. 4,076,668 to Kaneda, et al. relates to improving the adhesion of rubber compositions to a variety of plated metal substrates. A specific object of the patent is to improve the adhesion of rubber compositions to the steel cords in the building of tires. In accordance with the invention disclosed in the patent improved adhesion is obtained by adding to the rubber composition a cobalt salt of an organic acid having from 6 to about 30 carbon atoms. Exemplary cobalt salts listed are the naphthenate, stearate, octoate, oleate, resinate, linoleate, tallate and the like. In addition to the cobalt salt, however, the patentees also require the addition of a proportion of a monohydroxybenzoic acid; cobalt propionate is not mentioned.

U.S. Patent No. 3,897,583 to Bellamy also relates to improving the adhesion of rubber to metal by incorporating a cobalt salt into a rubber stock which

contains an adhesive, resin-forming system. The cobalt salts used in the invention include the cobalt salts of various organic acids, such as aliphatic or alicyclic carboxylic acids having from 6 to 30 carbon atoms, such as cobalt octoate, cobalt stearate, or cobalt naphthenate; cobalt propionate is not mentioned.

U.S. Patent No. 4,068,041 to Swarts, et al. discloses a method for rubberizing brass-plated steel cords. Improved adhesion is obtained by adding to the rubber composition a reinforcing pigment, such as silica, and a cobalt "soap" (e.g., cobalt stearate or cobalt naphthenate); cobalt propionate is not mentioned.

U.S. Patent No. 4,082,909 to Sugiyama, et al. relates to a rubber composition comprising a vulcanizable rubber and a proportion of a metal salt of hydroxybenzoic acid. Cobalt is disclosed as one of the metals in a list which also includes sodium, potassium, magnesium, calcium, aluminum, iron, tin, nickel, zinc and copper. The purpose of the addition is to improve adhesive strength of rubber compositions to metal substrates; cobalt propionate is not mentioned.

Czechoslovahian Patent 125,228 (1967) to Hornya discloses the use of cobalt propionate as a self-bonding adhesive for improving the adhesion of the rubber to unplated metal parts. The rubber compositions of this patent also contain a quantity of pine tar which is a known rubber tackifier.

The effectiveness of cobalt naphthenate, cobalt stearate and an organic cobalt/boron complex as promoters of adhesion of rubber to brass-plated steel cord was reported by L. R. Barker in NR Technology 12, part 4, page 77 (1981). Barker found the cobalt/boron complex to be more effective than either of the carboxylate salts.

While others have sought to improve adhesion between rubber compositions and metals by employing various combinations of cobalt and other metal complexes,

the art which has been presented herein does not disclose the exclusive use of a cobalt salt of propionic acid to increase adhesion between rubber and brass-plated or zinc-plated metallic reinforcement.

DESCRIPTION OF THE INVENTION

This invention relates to a rubber skim stock vulcanizable rubber composition, composites of rubber compositions and a product containing the skim stock or composition wherein the invention yields improved adhesion between a contiguous rubber skim stock and a brassed or zinc coated (that is, plated) metal member such as a metal filament reinforcement. The invention lies in the discovery that improved rubber-to-metal adhesion, and adhesion retention, can be obtained by adding to an otherwise conventional rubber skim stock composition appropriate amounts of cobalt propionate that is a cobalt salt of propionic acid.

In the practice of this invention, cobalt propionate is mixed into a rubber skim stock composition, as described below, this composition is then brought into contiguous relationship with at least one brassed or zinc coated metal member in an unvulcanized rubber composition, followed by vulcanization to yield the end product.

Thus, in one aspect, this invention constitutes, in a vulcanizable rubber composition comprising synthetic rubber, the improvement which is characterized by incorporating in the rubber an effective, metal adhesion-promoting and-retaining amount of a cobalt salt of propionic acid. Thereby is formed a composite of rubber composition containing synthetic rubber, and optionally natural rubber, and metal filament reinforcement thereof characterized in that the rubber composition contains an effective metal adhesion promoting and retaining amount of a cobalt salt of propionic acid.

The rubber compositions of this invention comprise or contain at least one synthetic rubber and, optionally, natural rubber; in other words, some compositions contain no natural rubber and others contain or comprise compatible blends of at least one synthetic rubber with natural rubber.

Composites of rubber compositions containing the above-described rubber compositions and metal filament reinforcement, which are further characterized by containing effective metal adhesion and promoting amounts of a cobalt salt of propionic acid as well as pneumatic or semi-pneumatic tires and other articles of manufacture such as conveyor, power and transmission belts and hoses containing or constructed of such composites are also part of the invention.

DETAILED DESCRIPTION OF THE INVENTION

Brass plated steel tire cords (wire), are well known for use in the belts and carcasses of passenger, truck and off-the-road tires and for other purposes like belts. The wire may be woven or non-woven filaments of steel, and the wire or cords when used in tires is usually called a fabric. The steel may be dipped, electroplated or otherwise coated with the brass as is well known. The brass plating should be complete although some iron may be exposed on commercially brass plated steel cords. Usually the brass is deposited as a thin coating on the steel, usually not over about 1.2% by weight of the steel. The brass may contain from about 60 to 95% by weight of copper, preferably from about 62 to 72% by weight of copper, and even more preferably in the upper portion of this range to obtain higher adhesion, the balance being essentially zinc except for very minor amounts of other elements or compounds as adventitious or alloying materials. For more information on brass please see "Encyclopedia of Chemical

Technology," Kirk-Othmer, 2nd Ed., Vol. 6, pages 183 to 265, 1965, Interscience Publishers, a division of John Wiley & Sons, Inc., New York.

The rubber compositions of this invention are made in the conventional manner by compounding and mixing the various synthetic, and optionally, natural rubber, if more than one rubber is used and their adding and compounding such conventional ingredients such as curatives (typically sulfur), cure accelerators, antidegradants, tackifying agents (if any), fillers, pigments, processing oils and the like. Although various types of fillers can be used, typically carbon black is employed.

The compounding materials are simply mixed together to form the compounded rubber and it is applied to the metal filament or cord thereof, usually in a form of a textile type fabric form, such as by calendering and the resulting composite built into a green tire, industrial belt or hose construction and the product simply molded and cured with the aid of pressure to form the article of manufacture. Generally, the rubber/metal composite is cured at a temperature in the range of abcut 50°C. to about 200°C.

Various synthetic rubbers can be used in the compositions, composites, tires and articles of this invention of which unsaturated types are preferred. Representative of such unsaturated rubbers are, for example, synthetic cis 1,4-polyisoprene, polychloroprene, cyclene rubbers, rubbery polymers derived from 1,3-butadiene, butadiene/styrene copolymers, isoprene/styrene copolymers, epichlorohydrin homo and copolymers, butadiene/acrylonitrile copolymers, EPDM rubbers, butyl rubbers, halobutyl rubbers, norbornene rubber, polysulfide rubbers, and blends thereof. Blends with a minor portion of block SBS or SIS (styrene and butadiene or isoprene) copolymers can also be used.

Optionally one or more of these synthetic rubbers can be blended with natural rubber. Typically such blends contain about 10 to 100 percent major and minor amounts such as synthetic rubber.

The metal wire cord itself in the practice of this invention can be composed of 1 to 50 (or more) filaments of steel wire twisted, or cabled together to form the cord. Therefore, the cord can be monofilament in nature although this is considered rare and at least four filaments are usually preferred. For example, for use in pneumatic passenger tires, the cord might be composed of 3 to 6 cabled filaments. Cord for truck tires might be composed of 10 to 30 cabled filaments while cord for giant earthmover vehicle tires might contain up to about 50 or more cabled filaments.

It is generally preferred that the steel filaments themselves are individually coated, or plated, with microporous, often practically monomolecular layer of brass or zinc, copper and bronze. Sometimes a combination of both is used with an outer monomolecular, microporous layer of zinc over a very thin brass plate on the steel wire.

It is recognized that the steel wire can be plated or coated with the metal or metal alloy by various methods such as described hereinabove to obtain a thin, preferably a practically monomolecular coat and usually somewhat microporous in nature.

It is not reasonably practical to describe within rigid limits the metal plating on the steel wire. Optimum thicknesses and amounts can be a function of variables such as ratio of copper to zinc or other plating metals, nature of surface to be plated, alloy nature, mode of deposition, thickness of initial oxide layers, magnitude of residual stresses.

The steel wire can relate generally to what is known as carbon steel, also called ordinary steel, also

called straight carbon steel or plain carbon steel, e.g., American Iron and Steel Institute Grade 1070 high carbon steel (AISI 1070). Such steel owes its properties chiefly to the presence of carbon without substantial amounts of other alloying elements.

Brass generally and preferably relates to compositions in which the major component is alpha brass, i.e., which contain from about 62 to 75 percent copper and 38 to 25 percent zinc, respectively.

The afore-described rubber compositions of this invention can be used with known tire manufacturing techniques to make pneumatic or semi-pneumatic rubber tires having a generally toroidal shape and comprised of a general construction containing a tread, spaced inextensible beads and sidewalls connecting said beads and tread and with a supporting carcass therefor, where said carcass is a metal cord-reinforced rubber composite of the inventive rubber composition and brass or zinc plated steel filaments in the form of cord.

Said cord is, composed of about 2 to about 50 cabled metal-plated steel filaments, said filament composed of steel filament having a microscopically porous metal coating thereon composed primarily of brass (typically alpha brass) and/or zinc.

The synthetic rubber of such tire carcass comprises at least one of the afore-described synthetic rubbers and optionally natural rubber. Similar industrial articles of manufacture selected from at least one of industrial conveyor belt, power transmission belt and hose where are, at least in part, can be constructed of the metal cord-reinforced rubber composites of the invention.

The practice of the present invention has been observed to result in improved aged rubber-metal adhesion (that is, adhesion retention), and in many cases, improved initial, i.e., original adhesion of vulcanized rubber to zinc or brass-coated steel/rubber composites.

In a specific embodiment, a skim stock material for use in steel wire belts for tires was mixed in an 1100 cc Banbury mixer (that is, a type B laboratory Banbury). Mix times were about 7 minutes with a final Banbury dump or drop temperature of about 325°F. Cobalt propionate was added during Banbury mixing to the masterbatch. This stock was then final mixed using a conventional two-roll mill at a temperature kept below 220°F.

Typical properties of a reinforcing belt skim stock include hardness values of over 60 shore Durometer, 300% modulus values of at least 1200 PSI, and accompanying elongations at break of at least 250%. The known uses for such a stock would include preparation of belt skims for belted tires such as radials or bias belted. In addition this stock could be used in wire reinforced continuous belts or any other application where the rubber would come in contact with the brass plated steel wire.

The level of cobalt propionate which we found to give acceptable improvements in adhesion and adhesion retention between rubber skim stock and brass coated wire was preferably between 2 and 8 parts of cobalt propionate per 100 parts of rubber. The levels of cobalt propionate necessary to maintain adhesion in the stock appear to be directly related to the nature of the particular rubber stock, and can vary from about 0.5 to about 15 parts per 100 parts of rubber polymer.

All testing of the wire-rubber composites was done in T-adhesion pads prepared by placing 60 gauge slabs of uncured rubber skim stock on 50 gage fiber reinforced backing. Sample T-adhesion pad width was 1/2 inch. Clean, brass wires were placed between two pads of the reinforced rubber skim stocks with the wires in contact with the uncured skim at 1/2 inch intervals. The pads were placed in a curing mold and were cured for 30 minutes at 300°F. Testing was done on a Table Model Instron Universal tester at 10 inches per minute at 230°F. Steam

bomb aging was done in a pressure vessel at 1 atmosphere, 300°F, and in a saturated steam atmosphere. Humidity chamber aging was done in a walk-in chamber kept at 90% relative humidity and 95°F.

Cobalt propionate has only recently become commercially available as it is more difficult to prepare in anhydrous form than, for example, the higher acid homologues. In addition to improving the adhesion and adhesion retention properties of conventional rubber skim stocks to brass and zinc coated steel, such as steel wire, such stocks also reflect, for example, lower heat build-up and higher modulus in comparison to other cobalt containing stocks.

The cobalt propionate utilized in the practice of our invention is commercially available and was prepared by the following reaction scheme:

$$Co(OH)_2 + 2CH_3CH_2COOH \xrightarrow[\text{heat}]{H_2O} \underset{\text{pink}}{Co(OCOCH_2CH_3)_2 \cdot n\,H_2O}$$

$$\downarrow -H_2O\text{(dehydration)}$$

$$\underset{\text{deep purple powder}}{Co(OCOCH_2CH_3)_2}$$

The color of the powder is somewhat subjective and has been described by various observers as purple, deep purple, blue/purple, violet and blue. To a suspension of cobalt hydroxide (93 g, 1 mole) in 500 ml of distilled water was added slowly to propionic acid (170 g., 2.3 moles) at room temperature with a magnetic stirring. After the reaction mixture was stirred at 80°C for 3 hours, the red solution was concentrated to a half of volume and was allowed to cool at room temperature. The red solution was poured into 1.5 liters of acetone to precipitate the pink product. The product was collected by filtration and washed with acetone. The pink product obtained was dried at 100-120°C vacuum until the product was changed to a deep purple color; yield - 94%.

Analysis; Calcd. for $C_6H_{10}O_4Co$: Co; 28.78%

Found: Co; 27.9%

The cobalt propionate produced by the above procedure contained 29% cobalt; was a deep purple powder and had a specific gravity (25°C) of 1.68+0.1. For convenience and to minimize dusting, this product is often used as a concentrate in extender or process oil dispersion.

The following Examples are representative. The composition component parts are expressed in parts per hundred, phr, unless otherwise specified. All ratios and percentages are by weight unless specifically indicated otherwise these components can be utilized within the ranges specified below as they would be compounded by one skilled in the art:

Masterbatch

(a) 100 parts rubber
(b) 20 to 90 phr carbon black
(c) 0 to 20 phr naphthenic process oil
(d) 1 to 12 phr zinc oxide
(e) 0 to 5 phr stearic acid
(f) 0.1 to 5 phr antioxidant (i.e., Santoflex 13)
(g) 0.1 to 5 phr antioxidant (i.e., Santoflex DD)
(h) 0.5 to 5 phr cobalt propionate

Mill Mix

(1) 0 to 10 phr sulfur per se or as an 80/20 preblend with extender oil
(2) 0.1 to 3 phr cure retarder [i.e., N-(cyclohexylthio)-phthalimide]
(3) 0.2 to 5 phr cure accelerator N-oxydiethylene benzothiazole 2-sulfenamide.

Conventional compounding procedures, for both Banbury masterbatch mixing and final mill mixing can be

utilized with a minimum of routine experimentation for optimization.

## GENERAL EXAMPLE

The following masterbatch composition was blended in an 1100 cc Banbury mixer for about 7 minutes with a final Banbury masterbatch temperature of about 325°F. The formulation is as follows with all parts given on the basis of parts per hundred parts of rubber (phr) by weight.

| Compounding Ingredients | Composition A |
|---|---|
| Synthetic rubber | 50 |
| Natural rubber | 50 |
| HAF carbon black | 50 |
| Zinc oxide | 8 |
| Stearic acid | 0.50 |
| Santoflex DD[(a)] | 1.0 |
| Naphthenic process oil[(b)] | 2.0 |
| Santoflex 13[(c)] | 1.0 |
| Cobalt propionate | 0.96 |

(a) = 6-dodecyl-1,2-dihydro-2,2,4-trimethylquinoline
(b) = Sun Oil Company's Circosol 410, a known oil of medium solvency containing a 35% minimum of naphthene ring carbons and having light yellow to amber color and a flash point of 330°F (minimum)
(c) = N-(1,3-dimethylbutyl)-N'-phenyl-p-phenylenediamine
(d) = N-oxydiethylene benzothiazole 2-sulfenamide

After about 7 minutes, the above masterbatch was dumped at about 325°F on mill rolls and cooled to a temperature below 220°F followed by blending in 3 to 6 phr sulfur and 0.70 phr NOBS special accelerator[(d)] and roll mill mixing at a temperature below 220°F followed by passing the resulting blend through the mill rolls using standard ASTM handling techniques.

In this mill mixing step, the sulfur can be introduced per se or as a 80/20 preblend with a naphthenic oil in the range of 18-22% oil. The sulfur is a yellow powder, 89.5% min. of which is insoluble sulfur.

It is to be understood that the foregoing composition of the rubber skim stock is presented solely to enable those skilled in the art to have at least one rubber skim stock with which to practice the invention. As such, the present invention is not to be limited only to this specific formulation.

Samples of the fully compounded rubber skim stock were then sheeted to the proper gauge to prepare T-adhesion pads.

Static wire adhesion results were obtained utilizing T-adhesion pads prepared by placing 60 gauge slabs of uncured fully compounded conventional rubber wire skim stock on 51 gauge fabric reinforced rubber backing. Commercial brass-coated wires (1x5x0.25 mm diam.) were placed between two pads of the reinforced skim stock with the wires in contact with the uncured rubber skim at 1.25 cm. intervals. The width of each adhesion pad was 1.25 cm. The uncured pads were placed in a mold and were cured for 30 minutes at 149°C. Unaged and aged wire adhesion results involving a conventional wire skim test compound with different levels of sulfur (3-6 phr) and with and without cobalt propionate are also shown.

The eight rubber compositions were each used to build T-adhesion pads with brass-plated and zinc-plated steel reinforcing cord. Five sets of rubber-to-metal adhesion tests were performed on each of the eight rubber skim compositions for comparison. Table I shows 50/50 NR/BR blends and 40/40/20 NR/SRB/BR triblends with either 3 or 6 phr sulfur and with and without 0.96 phr cobalt propionate. As can be seen in Table II, numerous cured physical properties for the eight rubber skim compositions are available for comparison. Lastly, Table III shows the

results of rubber-to-metal adhesion testing under normal (unaged), oven aged, steam bomb aged and oxygen aged conditions. The force necessary to pull the metallic reinforcement from the vulcanized rubber skim stock is given first, in lbs./inch., followed by the percent of rubber skim stock remaining on the surface of the metallic reinforcement. The amount of rubber skim stock remaining on the metallic reinforcement was determined by visual examination and is reported as percent rubber coverage.

## TABLE A - SUMMARY OF EXAMPLES

| | |
|---|---|
| Example I | 50 NR/50 BR blend - 3.0 phr sulfur (control) |
| Example II | 50 NR/50 BR blend - 3.0 phr sulfur and 0.96 phr Co propionate |
| Example III | 50 NR/50 BR blend - 6.0 phr sulfur (control) |
| Example IV | 50 NR/50 BR blend - 6.0 phr sulfur and 0.96 phr Co propionate |
| Example V | 40 NR/40 SBR/20 BR triblend - 3.0 phr sulfur (control) |
| Example VI | 40 NR/40 SBR/20 BR triblend - 3.0 phr sulfur and 0.96 phr Co propionate |
| Example VII | 40 NR/40 SBR/20 BR triblend - 6.0 phr sulfur (control) |
| Example VIII | 40 NR/40 SBR/20 BR triblend - 6.0 phr sulfur and 0.96 phr Co propionate |
| Table I | Rubber Skim Stock Formulations |
| Table II | Cured Stock Properties: 50 NR/50 BR blend and 40 NR/40 SBR/20 BR triblend with and without Co Propionate |
| Table III | Short Term Aged Rubber-to-Metal Adhesion Properties: 50 NR/50 BR blend and 40 NR/40 SBR/20 BR triblend with and without Co Propionate |

NR = natural rubber
BR = butadiene rubber
SBR = styrene butadiene rubber

TABLE I

RUBBER SKIM STOCK FORMULATIONS

| | | (Ex. I) | (Ex. II) | (Ex. III) | (Ex. IV) | (Ex. V) | (Ex. VI) | (Ex. VII) | (Ex. VIII) |
|---|---|---|---|---|---|---|---|---|---|
| | Natural Rubber (E grade) | 50 | 50 | 50 | 50 | 40 | 40 | 40 | 40 |
| (1) | BD (Diene) | 50 | 50 | 50 | 50 | 20 | 20 | 20 | 20 |
| (2) | SBR | - | - | - | - | 40 | 40 | 40 | 40 |
| | HAF black, phr (N-330) | 50 | 50 | 50 | 50 | 50 | 50 | 50 | 50 |
| | Zinc oxide, phr | 8 | 8 | 8 | 8 | 8 | 8 | 8 | 8 |
| | Stearic acid, phr | 0.50 | 0.50 | 0.50 | 0.50 | 0.50 | 0.50 | 0.50 | 0.50 |
| (3) | Santoflex DD, phr | 1.0 | 1.0 | 1.0 | 1.0 | 1.0 | 1.0 | 1.0 | 1.0 |
| (4) | Naph. process oil, phr | 2.0 | 2.0 | 2.0 | 2.0 | 2.0 | 2.0 | 2.0 | 2.0 |
| (5) | Santoflex 13, phr | 1.0 | 1.0 | 1.0 | 1.0 | 1.0 | 1.0 | 1.0 | 1.0 |
| (6) | Co propionate, phr | - | 0.96 | - | 0.96 | - | 0.96 | - | 0.96 |
| | Sulfur, phr | 3.0 | 3.0 | 6.0 | 6.0 | 3.0 | 3.0 | 6.0 | 6.0 |
| (7) | NOBS Special, phr | 0.70 | 0.70 | 0.70 | 0.70 | 0.70 | 0.70 | 0.70 | 0.70 |
| Total | | 166.20 | 167.16 | 169.20 | 170.16 | 166.20 | 167.16 | 169.20 | 170.16 |

(1) BR - a polybutadiene polymer of high purity and light color and an ML/4 at 212°F between 30 and 40 Mooney units, specific gravity of about 0.90 at 25°C and refractive index 1.5167

(2) SBR - non-staining emulsion SBR is a cold, mixed soap polymer containing between 23 and 26% bound styrene, having an ML/4 at 212°F of between 46 and 58, ash content 1.50% maximum, and a specific gravity of about 0.94 at 25°C

(3) 6-dodecyl-1,2-dihydro-2,2,4-trimethylquinoline

(4) A known oil of medium solvency containing a 35% minimum of napthene ring carbons, light yellow to amber oil, having a flash point of 330°F minimum, and a specific gravity of about 0.88 to 0.93 at 25°C

(5) N-(1,3-dimethylbutyl)-N'-phenyl-p-phenylenediamine

(6) Purple powder containing about 29% cobalt and having a specific gravity of about 1.68 ± 0.1 at 25°C. Also Co propionate is available as a preblend with aromatic process oil (with about 10% oil by weight) having a specific gravity of about 1.55 at 25°C.

(7) N-Oxydiethylene Benzothiazole-2-Sulfenamide

TABLE II

CURED PHYSICAL PROPERTIES: 50 NR/50 BR BLEND AND 40 NR/40 SBR/20 DIENE TRIBLEND WITH AND WITHOUT CO PROPIONATE

| | (Ex. I) | (Ex. II) | (Ex. III) | (Ex. IV) | (Ex. V) | (Ex. VI) | (Ex. VII) | (Ex. VIII) |
|---|---|---|---|---|---|---|---|---|
| NR (E grade) | 50 | 50 | 50 | 50 | 40 | 40 | 40 | 40 |
| SBR | - | - | - | - | 40 | 40 | 40 | 40 |
| BR (Diene) | 50 | 50 | 50 | 50 | 20 | 20 | 20 | 20 |
| Sulfur, phr | 3.0 | 3.0 | 6.0 | 6.0 | 3.0 | 3.0 | 6.0 | 6.0 |
| Co Propionate, phr | - | 0.96 | - | 0.96 | - | 0.96 | - | 0.96 |
| Monsanto Rheometer at 300°F, Mini-die, 100 RPM, 1° Arc | | | | | | | | |
| Scorch time, min. | 10.4 | 8.7 | 7.7 | 6.6 | 10.5 | 6.7 | 7.9 | 6.8 |
| Time to 90% cure, min. | 22.7 | 18.6 | 30.5 | 17.6 | 26.8 | 23.3 | 26.3 | 21.5 |
| Min. torque, inch-lbs | 10.1 | 10.4 | 9.8 | 10.4 | 12.8 | 11.8 | 15.7 | 14.3 |
| Torque at 90% cure, inch-lbs | 38.6 | 47.7 | 46.4 | 56.2 | 44.0 | 54.2 | 53.4 | 61.0 |
| Max. torque, inch-lbs | 41.8 | 51.8 | 50.5 | 61.3 | 47.5 | 58.9 | 57.6 | 66.2 |
| Cure Rate Index (CRI) | 8.1 | 10.1 | 4.4 | 9.1 | 6.1 | 6.0 | 5.4 | 6.8 |
| Normal Stress-Strain Properties (73°C) - cured at 300°F (149°C) | | | | | | | | |
| 100% Modulus, psi | | | | | | | | |
| 23' | 350 | 550 | 400 | 775 | 400 | 635 | 610 | 925 |
| 30' | 375 | 560 | 410 | 800 | 450 | 665 | 710 | 1050 |
| 200% Modulus, psi | | | | | | | | |
| 23' | 850 | 1325 | 1050 | 1785 | 985 | 1525 | 1575 | 2125 |
| 30' | 910 | 1325 | 1075 | 1850 | 1175 | 1625 | 1825 | 2350 |
| 300% Modulus, psi | | | | | | | | |
| 23' | 1625 | 2300 | 1975 | - | 1825 | 2575 | 2750 | - |
| 30' | 1725 | 2310 | 2000 | - | 2150 | 2725 | 3050 | - |
| Tensile Strength, psi | | | | | | | | |
| 23' | 3175 | 3075 | 2690 | 2485 | 3470 | 3550 | 3275 | 3135 |
| 30' | 3225 | 2975 | 2430 | 2450 | 3365 | 3425 | 3200 | 2850 |
| Elongation at break, % | | | | | | | | |
| 23' | 485 | 375 | 375 | 265 | 485 | 390 | 350 | 285 |
| 30' | 475 | 365 | 345 | 250 | 425 | 365 | 315 | 240 |
| Steel Ball Rebound - Compression Set Button - cured 30' at 300°F (149°C) | | | | | | | | |
| %: at 73°F | 60 | 58 | 60 | 58 | 55 | 52 | 57 | 54 |
| at 212°F | 70 | 72 | 75 | 76 | 71 | 70 | 77 | 73 |
| Shore "A" Hardness - Compression Set Button - cured 30' at 300°F (149°C) | | | | | | | | |
| tested at 73°F | 62 | 70 | 64 | 75 | 66 | 72 | 71 | 78 |

TABLE III

SHORT TERM AGED RUBBER-TO-METAL ADHESION PROPERTIES:
50 NR/50 BR BLEND AND 40 NR/40 SBR/20 BR TRIBLEND WITH AND WITHOUT CO PROPIONATE

| | (Ex. I) | (Ex. II) | (Ex. III) | (Ex. IV) | (Ex. V) | (Ex. VI) | (Ex. VII) | (Ex. VIII) |
|---|---|---|---|---|---|---|---|---|
| NR (E grade) | 50 | 50 | 50 | 50 | 40 | 40 | 40 | 40 |
| SBR | - | - | - | - | 40 | 40 | 40 | 40 |
| BR (Diene) | 50 | 50 | 50 | 50 | 20 | 20 | 20 | 20 |
| Sulfur, phr | 3.0 | 3.0 | 6.0 | 6.0 | 3.0 | 3.0 | 6.0 | 6.0 |
| Co Propionate, phr | - | 0.96 | - | 0.96 | - | 0.96 | - | 0.96 |
| **Normal (Unaged) Steelcord T-Adhesion at 230°F - T-Adhesion pads cured 30' at 300°F** | | | | | | | | |
| 7/2+1 brass-plated wire | | | | | | | | |
| lbs./inch | 132.3 | 160.8 | 136 | 147.4 | 151.1 | 164 | 117.4 | 148.6 |
| % rubber coverage | (80-85) | (95) | (85) | (95) | (90) | (95) | (90) | (95) |
| 7/2+1 zinc-plated wire | | | | | | | | |
| lbs./inch | 15.6 | 162.4 | 19.7 | 151.8 | 22.5 | 169.8 | 27.1 | 149.8 |
| % rubber coverage | (0) | (95) | (0) | (95) | (0) | (95-100) | (0) | (95-100) |
| **Oven Aged Steelcord T-Adhesion at 230°F - T-Adhesion pads cured 30' at 300°F - cured T-Adhesion pads Heat Aged 2 days at 250°F** | | | | | | | | |
| 7/2+1 brass-plated wire | | | | | | | | |
| lbs./inch | 88 | 105.6 | 86.3 | 94.6 | 84.5 | 102.6 | 79.1 | 99.8 |
| % rubber coverage | (85-90) | (95-100) | (85-90) | (95) | (90) | (90-95) | (85-90) | (95-100) |
| 7/2+1 zinc-plated wire | | | | | | | | |
| lbs./inch | 16.3 | 94 | 23.5 | 101 | 22.4 | 110.6 | 26.6 | 98.7 |
| % rubber coverage | (0) | (90) | (0) | (90) | (0) | (85) | (0) | (90) |
| **Steam Bomb Aged Steelcord T-Adhesion at 230°F - T-Adhesion pads cured 30' at 300°F - cured T-Adhesion pads steam aged 1 hr. at 300°F** | | | | | | | | |
| 7/2+1 brass-plated wire | | | | | | | | |
| lbs./inch | 122.8 | 118.8 | 113.1 | 114.8 | 123 | 95.8 | 110.2 | 105.9 |
| % rubber coverage | (75) | (65-70) | (85-90) | (90-95) | (80) | (70-75) | (85) | (90) |
| 7/2+1 zinc-plated wire | | | | | | | | |
| lbs./inch | 14.2 | 127.8 | 21.2 | 126.8 | 18.2 | 132.1 | 25.2 | 119.8 |
| % rubber coverage | (0) | (90) | (0) | (90-95) | (0) | (80-85) | (0) | (90) |

TABLE III (CONT'D.)

SHORT TERM AGED RUBBER-TO-METAL ADHESION PROPERTIES:
50 NR/50 BR BLEND AND 40 NR/40 SBR/20 BR TRIBLEND WITH AND WITHOUT CO PROPIONATE

| | (Ex. I) | (Ex. II) | (Ex. III) | (Ex. IV) | (Ex. V) | (Ex. VI) | (Ex. VII) | (Ex. VIII) |
|---|---|---|---|---|---|---|---|---|
| Oxygen Bomb Aged Steelcord T-Adhesion at 230°F - T-Adhesion pads cured 30' at 300°F | | | | | | | | |
| Oxygen Bomb Aged 24 hours at 158°F (70°C) | | | | | | | | |
| 7/2+1 brass-plated wire | | | | | | | | |
| lbs./inch | 59.8 | 153.3 | 85.2 | 117.8 | 61.6 | 127.8 | 72 | 114.8 |
| % rubber coverage | (0) | (90-95) | (10-15) | (90-95) | (0) | (90) | (10-15) | (90) |
| 7/2+1 zinc-plated wire | | | | | | | | |
| lbs./inch | 12.9 | 148.8 | 15.6 | 136.8 | 17.3 | 146.9 | 18.4 | 120.4 |
| % rubber coverage | (0) | (90-95) | (0) | (90) | (0) | (85-90) | (0) | (90) |
| Oxygen Bomb Aged 48 hours at 158°F (70°C) | | | | | | | | |
| 7/2+1 brass-plated wire | | | | | | | | |
| lbs./inch | 57.4 | 122.6 | 81 | 116.4 | 57.2 | 124 | 71.4 | 111.7 |
| % rubber coverage | (0) | (85-90) | (15) | (85-90) | (0) | (85-90) | (0) | (90-95) |
| 7/2+1 zinc-plated wire | | | | | | | | |
| lbs./inch | 18 | 127.6 | 16.2 | 132.2 | 20.7 | 106.8 | 16.2 | 109.2 |
| % rubber coverage | (0) | (90) | (0) | (90) | (0) | (90-95) | (0) | (90-95) |

The retarder component functions as a prevulcanization inhibitor and can be, for example, Santogard PVI by Monsanto, N-(cyclohexylthio)-phthalimide.

The testing of our stabilized and adhesion retaining skim stocks was done on T-adhesion pads prepared by placing 60 gauge slabs of uncured skim stock on 51 gauge fiber reinforced backing. Sample width was 1/2 inch. Clean brass coated wires were placed between two pads of the reinforced skim stock with the wires in contact with the uncured skim at 1/2 inch intervals. The pads were placed in a mold and were cured for 30 minutes at 300°F. Testing was done on an Instron Universal Tester at 10 inches per minute and 230°F. Steam bomb aging of the samples was one in a pressure tight bomb at 1 atmosphere pressure, 300°F, and a saturated steam atmosphere.

The unconditioned T-adhesion results set forth in the preceding examples are in lbs./in. and % rubber coverage is visually determined. The conditioned T-adhesion results are determined after 1 hour in 300°F steam in lbs./inch with % rubber coverage being determined visually.

DETAILED T-ADHESION TEST PROCEDURE

1. Using a Clicker machine (Rytronic cutting machine manufactured by the United Shoe Corp.) and a 6 x 1/2 inch die, prepare an adequate number of calendered and control stock samples for pad building.
2. Use one piece of calendered fabric backing (.051").
3. Ply one piece of control rubber stock (.060") onto the fabric backing.
4. Place sample in building jig with fabric side down.

5. Place ten cords (of brass coated wire) approximately 7" in length equally spaced on top of the two piece assembly.
6. Invert another 2 ply assembly, made as in items 1, 2 and 3 on top of cords so that cords are between 2 layers of stock to be tested.
7. This assembly should now fit snugly into the mold.
8. Adhesion pads shall be cured for 30 minutes at 300°F, and then allowed to equilibrate for 24 hours.
9. Testing Machine: 1130 Instron Universal Tester.
10. Test speed 10"/minute; test temperature 230°F after a 20' preheat.
11. The top grip shall be of a special holder made for the cured sample, with a slot in the bottom to permit the sample to be inserted with the wire protruding. The bottom grip shall be a wedge type, designed to exert increasing tightening as the wire is pulled.
12. Record 10 pulls and average. Multiply by 2 to get lbs. per inch.

The preceding Examples can be varied within the scope of our total specification disclosure, as it would be understood and practiced by one skilled in the art, to achieve essentially the same results. Equivalent reactants can be used.

As can be determined from Table III, five sets of rubber-to-metal adhesion tests were conducted on each of the eight stocks for comparison. Adhesion and % rubber coverage on the wire pull-outs for rubber compositions (Examples II, 4, 6 and 8) to brass-plated and especially

zinc-plated steel cord were significantly better than for the rubber compositions (controls) with either 3 or 6 phr sulfur and without cobalt propionate. Also, significant improvements in adhesion and % rubber coverage were observed for compositions containing cobalt propionate when compared to rubber compositions without cobalt propionate. The sulfur level (either 3 or 6 phr) had only minimal effects on adhesion and % coverage retention.

It is common practice in the art to increase the strength of rubber products such as a rubber belt or a pneumatic tire by incorporating therein a zinc plated or a copper-zinc (brass) alloy plated steel cord. Such prior art rubber-steel cord composites must retain satisfactory adhesion of the steel cord to the vulcanized rubber, particularly when such skim stock steel cord composite has been stored for a long period of time in a warm humid atmosphere prior to fabrication with the rubber.

When our skim stock is used in the conventional steel cord tire construction, for example, it is extremely important that the bond between the rubber skim ply stock and the wire fabric also be as flexible and as strong as possible for efficient use under operating conditions; this is especially important in the case of truck tires which are subjected to high loads and speeds with consequent heat buildup due to the rapid flexing of the plies.

As noted above, the rubbers to be used in the practice of this invention includes vulcanizable rubbers. Rubbers that can be utilized include natural rubbers, synthetic rubbers, polyisoprene, polybutadiene, copolymers of butadiene and styrene and the like, and blends thereof. The particular rubber composition selected is preferably a blend of natural rubber and polybutadiene. An extender oil, when utilized, can be, for example, any known medium process oil, aromatic or naphthenic hydrocarbon derived.

The antioxidant selected can be, for example, N-(1,3-dimethyl butyl)-N'-phenyl-p-phenylenediamine, known in the trade as Santoflex 13; or other phenyl-p-phenylenediamine derivatives.

The accelerator preferably utilized in the practice of our invention is N-oxydiethylene benzothiazole-2-sulfenamide; this accelerator is commercially available from American Cyanamid and is known as NOBS Special. Other accelerators such as N-t-butyl-2-benzothiazolesulfenamide can also be utilized; the particular accelerator selected is not critical.

Any known rubber reinforcing carbon black can be used, such as the known HAF, ISAF and other carbon blacks. Curing is preferably achieved through use of sulfur as a sulfur/oil blend preferably utilized at a ratio of 80/20. The use of HAF carbon black is preferred. Curing can also be achieved through known peroxide or irradiation means.

Compounding ingredients customarily employed in the rubber compounding art can be added to our skim stock composition and include accelerators, antioxidants, bactericides and the like, color pigments, extenders, reinforcing pigments, softeners, vulcanizing agents, etc. The compounding ingredients are used in the amounts necessary to achieve the desired properties in the resulting vulcanizate as is well known to those skilled in the art.

The skim stock of the present invention can be applied by use of calendering means, spray means or other known application techniques. Areas of significant utility include, but are not limited to, radiator hose, pneumatic tires, air ride springs, metal reinforced products such as rubber bumpers and sporting goods grips such as golf club handles; in each of these representative areas of utility, the skim stock composition can be used to increase adhesion and adhesion retention properties

between metal and rubber, including use in operation when bright steel surfaces are present.

When the skim stock of this invention is used in steel cord tire construction, for example, it is extremely important, both in new tire construction and retread or repair operations, that the bond between the rubber ply stock and the wire fabric be as flexible and as strong as possible for efficient use under operation conditions; this is especially important in the case of truck tires which are subjected to high loads and speeds with consequent heat buildup due to the rapid flexing of the plies.

The present invention also finds utility in, for example, metal-rubber articles such as motor mounts, cutless bearings, torsilastic springs, power belts, printing rolls, metal wire reinforced or braided hose, electrical deicers, shoe heels, and wherever it is desired to secure rubber to plated or unplated metal to provide a flexible and strong bond between the same.

The coated wire utilized in the practice of our invention can be, for example, zinc plated or brass plated wire, i.e., 70% Cu, 30% Zn palted steel. The wire can be in the form of a strand, mat, web, ply or braid.

We Claim:

1. In a vulcanizable rubber composition comprising synthetic rubber, the improvement which is characterized by incorporating in the rubber composition an effective metal adhesion - promoting and retaining amount of cobalt salt of propionic acid.

2. A composite of rubber composition containing synthetic rubber, and optionally natural rubber, and metal filament reinforcement therefor characterized in that the rubber composition contains an effective metal adhesion - promoting and retaining amount of a cobalt salt of propionic acid.

3. The composite of claim 2 where said reinforcement is a steel filament having a microscopic porous layer thereon composed primarily of brass or zinc.

4. The composite of claim 3 where said steel filament is brass plated.

5. The composite of claim 2 where no natural rubber is present.

6. The composite of claims 2, 4 or 5 where said rubber is selected from at least one of natural rubber, synthetic cis-1,4-polyisoprene, polychloroprene, cyclene rubbers, rubbery polymers derived from 1,3-butadiene, butadiene/styrene copolymers, isoprene/styrene copolymers, epichlorohydrin homo and copolymers, butadiene/acrylonitrile copolymers, EPDM rubbers, butyl rubbers, halobutyl rubbers, norbornene rubbers, thiokol rubbers, and blends thereof.

7. A pneumatic or semi-pneumatic rubber tire having a generally toroidal shape and comprised of a general construction containing a tread, spaced inextensible beads and sidewalls connecting said beads and tread and with a supporting carcass therefor, where said carcass is a metal cord-reinforced rubber composite of claim 2.

8. The rubber tire of claim 7 where said cord is composed of about 2 to about 50 cabled metal-plated steel filaments, said filament composed of steel filament having a microscopically porous metal coating thereon composed primarily of brass and/or zinc.

9. The tire of claim 8 where said steel filaments have a coating of brass.

10. The tire of claims 7 or 9 where said steel is carbon steel and the major component of said brass is alpha brass.

11. The tire of claims 7, 9, or 10 where said rubber is at least one synthetic rubber selected from the group consisting of cis-1,4- polyisoprene, polychloroprene, rubbery polymers derived from 1,3-butadiene, butadiene/styrene copolymers, isoprene/styrene copolymers, epichlorohydrin homo and copolymers, butadiene/acrylonitrile copolymers, EPDM rubbers, butyl rubbers, halobutyl rubbers, polysulfide rubbers and blends thereof.

12. An industrial article of manufacture selected from at least one of industrial conveyor belt, power transmission belt and hose where are, at least in part, constructed of the metal cord-reinforced rubber composite of claims 1, 2 or 6.

13. The composite of claims 2, 4 or 5 where the cobalt salt is in the purple form and the rubber is a blend of natural rubber, rubbery butadiene or natural rubber rubbery butadiene and styrene/butadiene copolymer.

14. The tire of claims 7, 8, or 9 where the cobalt salt is in the purple form and the rubber is a blend of natural rubber, rubbery butadiene or natural rubber rubbery butadiene and styrene/butadiene copolymer.

0190398

European Patent Office

# EUROPEAN SEARCH REPORT

Application number

EP 85 11 2678

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 039 769 (FIRESTONE) * Claims 1,5; page 18, line 33 * --- | 1-14 | C 08 K 5/09<br>C 08 L 21/00<br>C 08 J 5/10 |
| X | EP-A-0 037 942 (FIRESTONE) * Claims 3,8; page 14, line 24 * --- | 1-14 | |
| X | CHEMICAL ABSTRACTS, vol. 69, no. 26, 23rd December 1968, page 10091; no. 107520w, Columbus, Ohio, US; & CS - A - 125 228 (V. HORYNA et al.) 15-12-1967 * Abstract * ----- | 1-6 | |
| | | | TECHNICAL FIELDS SEARCHED (Int. Cl.4) |
| | | | C 08 K 5/09<br>C 08 L 21/00 |

The present search report has been drawn up for all claims

| Place of search | Date of completion of the search | Examiner |
|---|---|---|
| THE HAGUE | 09-05-1986 | VAN HUMBEECK F.W.C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document